# EUROPÄISCHE PATENTANMELDUNG

(11) **EP 3 866 308 A1**
(43) Veröffentlichungstag der Anmeldung: **18.08.2021**
(21) Anmeldenummer: 20156637.9
(22) Anmeldetag: 11.02.2020
(51) Int. Cl.: H02K 3/30, H02K 3/38, H02K 3/40, H02K 15/10, H02K 15/12

(54) **TEILENTLADUNGSVERHINDERNDE WICKELKOPFIMPRÄGNIERUNG**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)

(57) **Zusammenfassung**

Die Erfindung betrifft eine elektrische rotierende Maschine (2), insbesondere eine umrichterbetriebene Niederspannungsmaschine mit einem Stator (8). Damit Teilentladungen während des Betriebes, im Vergleich zum Stand der Technik, weniger häufig auftreten, wird vorgeschlagen, dass der Stator (8) ein Statorblechpaket (16) und eine in Nuten des Statorblechpakets (16) angeordnete Statorwicklung (18) aufweist, wobei die Statorwicklung (18) elektrisch isolierte Spulen (22) umfasst, die an den axialen Enden des Statorblechpakets (16) Wickelköpfe (24) ausbilden, wobei die elektrisch isolierten Spulen (22) zur Erhöhung einer TE-Einsetzspannung, zumindest im Bereich der Wickelköpfe (24), mit einem elektrisch funktionell gefüllten Reaktivharz (36) imprägniert sind.

## Beschreibung

Die Erfindung betrifft eine elektrische rotierende Maschine, insbesondere umrichterbetriebene Niederspannungsmaschine.

Ferner betrifft die Erfindung ein Verfahren zur Herstellung einer elektrischen rotierenden Maschine, insbesondere einer umrichterbetriebenen Niederspannungsmaschine.

Darüber hinaus betrifft die Erfindung die Verwendung eines elektrisch funktionell gefüllten Reaktivharzes zur Imprägnierung einer Statorwicklung einer elektrischen rotierenden Maschine, insbesondere einer umrichterbetriebenen Niederspannungsmaschine, zur Erhöhung einer TE-Einsetzspannung.

Insbesondere Niederspannungsmaschinen, welche mit einer Leistung im Bereich von 0,35 kW bis 1600 kW betreibbar sind, werden zunehmend mit einem Umrichter oder zumindest im gleichen Netz wie ein umrichterbetriebenes System betrieben, was, beispielsweise in Kombination mit langen Zuleitungen, zu impulsartigen Spannungsspitzen führt. Diese Spannungsspitzen liegen unter Umständen oberhalb einer Normspannung des Isolationssystems, wodurch, insbesondere im Zusammenspiel der verschiedenen Dielektrizitätszahlen der Isolationsbestandteile in Verbindung mit Fehlstellen, beispielsweise Poren, Lufteinschlüsse, und vieles mehr, ein Paschenminimum in der jeweiligen Umgebung überschritten wird und Teilentladungen zünden.

Weitere Fehlerquellen sind insbesondere Qualitätsprobleme in der Wicklung. Insbesondere durch Handarbeit, kommt es beispielsweise vor, dass Phasentrenner nicht richtig platziert sind oder im weiteren Fertigungsprozess verrutschen, sodass Drähte zufällig jeweils andere Drähte kreuzen, sodass eine unzulässig hohe Potentialdifferenz entsteht.

Ferner können aus Mangel an Imprägnierharz Fehlstellen zwischen den Drahtzwickeln entstehen. Aktuelle Tauchimprägnierprozesse, welche eine wirtschaftliche Fertigung zulassen, sind genauso anfällig für derartige Mängel, wie die aktuell vorherrschende Wickelkopf-Bearbeitung in Handarbeit. Insbesondere treten häufig mehrere dieser Mängel gleichzeitig auf, wodurch bei Überspannungen im Netz Teilentladungen auftreten, das Isolationsmaterial degradiert und ein Ausfall der Maschine folgt.

Die Offenlegungsschrift DE 10 2011 085 051 A1 beschreibt ein Verfahren zum thermischen Anbinden eines Stator-Wickelkopfes an ein Stator-Gehäuse einer elektrischen Maschine. Das Verfahren weist die folgenden Schritte auf: Einbringen eines wärmeleitenden und elektrisch isolierenden Füllstoffs zwischen dem Stator-Wickelkopf und dem Stator-Gehäuse und Imprägnierung des wärmeleitenden Füllstoffs und des Stator-Wickelkopfes mittels eines Imprägnierstoffs nach dem Einbringen des wärmeleitenden Füllstoffs.

Die Offenlegungsschrift DE 10 2016 213 790 A1 beschreibt einen Elektromotor mit einem Rotor und einem Stator, dessen Stator ein hohlzylindrisches Statorblech und eine aus mehreren schichtweise übereinander angeordneten, umlaufenden Spulenlagen bestehende verteilte Wicklung mit einem Wickelkopf aufweist. Im Wickelkopf ist zwischen zwei übereinander angeordneten benachbarten Spulenlagen eine spaltförmige, in Umfangsrichtung gekrümmte und in den Endbereichen spitz zulaufende Ausnehmung vorgesehen. In diese ist ein korrespondierend ausgebildetes Sensoraufnahmeelement derart eingebracht, dass die die spaltförmige Ausnehmung begrenzenden Mantelflächen der beiden Spulenlagen großflächig und wärmeleitend an dem Sensoraufnahmeelement anliegen. Das Sensoraufnahmeelement weist einen sich in axialer Richtung erstreckenden und eine Einführöffnung aufweisenden Aufnahmeraum für einen Temperatursensor zur Erfassung der Innentemperatur des Wickelkopfes und besteht aus einem Werkstoff, welcher eine höhere Wärmeleitfähigkeit aufweist als ein Imprägniermaterial, mittels welchem der Wickelkopf der Wicklung imprägnierbar ist.

Der Erfindung liegt die Aufgabe zugrunde, ein eine elektrische rotierende Maschine, insbesondere eine umrichterbetriebene Niederspannungsmaschine, anzugeben, bei der Teilentladungen während des Betriebes, im Vergleich zum Stand der Technik, weniger häufig auftreten.

Die Aufgabe wird erfindungsgemäß durch eine elektrische rotierende Maschine, insbesondere eine umrichterbetriebene Niederspannungsmaschine, gelöst, wobei die elektrische rotierende Maschine einen Stator umfasst, der ein Statorblechpaket und eine in Nuten des Statorblechpakets angeordnete Statorwicklung aufweist, wobei die Statorwicklung elektrisch isolierte Spulen umfasst, die an den axialen Enden des Statorblechpakets Wickelköpfe ausbilden, wobei die elektrisch isolierten Spulen zur Erhöhung einer TE-Einsetzspannung, zumindest im Bereich der Wickelköpfe, mit einem elektrisch funktionell gefüllten Reaktivharz imprägniert sind.

Ferner wird die Aufgabe erfindungsgemäß durch ein Verfahren zur Herstellung einer elektrischen rotierenden Maschine, insbesondere einer umrichterbetriebenen Niederspannungsmaschine, gelöst, wobei die elektrische rotierende Maschine einen Stator umfasst, der ein Statorblechpaket und eine in Nuten des Statorblechpakets angeordnete Statorwicklung aufweist, wobei die Statorwicklung elektrisch isolierte Spulen umfasst, die an den axialen Enden des Statorblechpakets Wickelköpfe ausbilden, wobei die elektrisch isolierten Spulen zur Erhöhung einer TE-Einsetzspannung, zumindest im Bereich der Wickelköpfe, mit einem elektrisch funktionell gefüllten Reaktivharz imprägniert werden.

Darüber hinaus wird die Aufgabe erfindungsgemäß durch die Verwendung eines elektrisch funktionell gefüllten Reaktivharzes zur Imprägnierung einer Statorwicklung einer elektrischen rotierenden Maschine, insbesondere einer umrichterbetriebenen Niederspannungsmaschine, zur Erhöhung einer TE-Einsetzspannung gelöst.

Die in Bezug auf die Vorrichtung nachstehend angeführten Vorteile und bevorzugten Ausgestaltungen lassen sich sinngemäß auf das Verfahren und die Verwendung übertragen.

Der Erfindung liegt die Überlegung zugrunde, elektrische rotierende Maschine, insbesondere eine umrichterbetriebene Niederspannungsmaschine, anzugeben, die eine Imprägnierung aus einem elektrisch funktionell gefüllten Reaktivharz aufweist, durch die eine Teilentladungs-Einsetzspannung, kurz TE-Einsetzspannung, erhöht wird, wodurch die Häufigkeit von Teilentladungen während des Betriebes der elektrischen rotierenden Maschine reduziert wird. Die Zündung einer Teilentladung erfolgt bei einem Spannungsanstieg und führt zum kurzfristigen Spannungseinbruch bei Zündung. Dieser Punkt wird als TE-Einsetzspannung bezeichnet. Eine Niederspannungsmaschine ist beispielsweise mit einer Betriebsspannung von maximal 1 kV betreibbar. Das Harz der Imprägnierung dient insbesondere der mechanischen Verfestigung der Spulen und der Passivierung vor Umwelteinflüssen. Für die elektrische Isolation sind die Leiter der Spulen beispielsweise mit einem isolierenden Drahtlack beschichtet, der als Hauptisolation dient. Das für die Imprägnierung verwendete elektrisch funktionell gefüllte Reaktivharz (1K oder 2K) weist durch die Füllung eine, insbesondere elektrisch, feldsteuernde Wirkung auf. Die feldsteuernde Wirkung ist beispielsweise resistiv, kapazitiv und/oder nichtlinear. Beispielsweise wird eine, insbesondere resistive, Feldsteuerung durch eine unterperkoläre Füllung mit elektrisch leitfähigen Mikropartikeln erreicht. Durch die feldsteuernde Wirkung der Imprägnierung entladen sich Spannungsimpulse, welche beispielsweise durch einen Umrichter generiert werden, nicht als Teilentladung, z.B. in Poren, sondern fallen zumindest teilweise am elektrisch funktionell gefüllten Reaktivharz ab, wodurch verhindert wird, dass eine Teilentladung zündet.

Besonders vorteilhaft weist das elektrisch funktionell gefüllte Reaktivharz einen feldstärkeabhängigen Leitwert auf. Ein feldstärkeabhängiger Leitwert wird beispielsweise durch eine, insbesondere überperkoläre, Füllung aus Mikropartikeln erreicht, die Halbleiter wie Germanium, Galliumarsenid, Siliciumcarbid, Diamant oder Bornitrid enthalten. Der Leitwert steigt beispielsweise bei einer Erhöhung der Feldstärke nichtlinear an, sodass das elektrisch funktionell gefüllte Reaktivharz im konventionellen Betrieb der elektrischen rotierenden Maschine, bei dem übliche Spannungen auftreten, eine hohe Isolationswirkung aufweist, während sich bei hohen Impulsspannungen, wie sie beispielsweise bei einer Teilentladung auftreten, die Leitfähigkeit erhöht, sodass das Zünden einer Teilentladung verhindert wird.

In einer weiteren Ausführungsform enthält das Reaktivharz Siliziumcarbid. Beispielsweise enthält das Reaktivharz splittrig globulare Mikropartikel aus Siliziumcarbid. Durch Siliziumcarbid als Füllstoff werden feldabhängige, nichtlineare Impedanzeigenschaften erreicht. Durch die Nutzung von Siliziumcarbid als Füllstoff-Material kann sowohl die notwendige Leitfähigkeit im Bereich hoher Impulsspannungen, wie sie beispielsweise bei einer Teilentladung auftreten, sichergestellt werden, als auch eine hohe Isolationswirkung bei während des Betriebes der elektrischen rotierenden Maschine üblichen Spannungen erreicht werden.

Bei einer weiteren Ausgestaltung ist ein Füllstoffgehalt von Siliziumcarbid überperkolär ausgestaltet. Ein Füllstoffgehalt ist oberhalb einer Partikelmassenkonzentration, bei der sich das elektrisch leitfähige Netzwerk der Partikel vollständig ausgebildet hat, überperkolär. Dieser liegt bei kommerziellen SiC Füllstoffen (Mikropartikel, sphärisch, Größe 5-30 pm) im Bereich von 60-90 gew.-% (Dichte 3,2g/cm³). Durch den überperkolären Füllstoffgehalt wird die Leitfähigkeit, insbesondere bei hohen Impulsspannungen, erhöht, sodass das Zünden einer Teilentladung verhindert wird.

In einer weiteren Ausführungsform ist der Siliziumcarbid-Füllstoff als Mikropartikel mit einer Partikelgröße von 5-30 µm ausgeführt. Erfahrungsgemäß hat sich eine derartige Partikelgröße als besonders vorteilhaft erwiesen.

In einer weiteren Ausführungsform enthält das Reaktivharz ein halbleitendes Metalloxid, insbesondere Zinkoxid, Zinndioxid oder Titansuboxid. Als Titansuboxid werden Titanoxide bezeichnet, die weniger Sauerstoff als das thermodynamisch stabilste Oxid im chemischen System Ti-O, Titandioxid (TiO2), enthalten. Zinkoxid weist beispielsweise ein Varistor-Verhalten auf, wobei ein Nichtlinearitätskoeffizient α, verglichen mit Siliziumcarbid, deutlich höher ist. Durch derartige Metalloxide als Füllstoff werden feldabhängige, nichtlineare Impedanzeigenschaften erreicht, durch deren Nutzung sowohl die notwendige Leitfähigkeit im Bereich hoher Impulsspannungen, wie sie beispielsweise bei einer Teilentladung auftreten, sichergestellt wird, als auch eine hohe Isolationswirkung bei während des Betriebes der elektrischen rotierenden Maschine üblichen Spannungen erreicht wird.

Bei einer weiteren Ausgestaltung ist das halbleitende Metalloxid mit Antimon, Fluor oder Iod dotiert und/oder ein Füllstoffgehalt des halbleitenden Metalloxids überperkolär ausgestaltet. Durch den überperkolären Füllstoffgehalt wird die Leitfähigkeit, insbesondere bei hohen Impulsspannungen, erhöht, sodass das Zünden einer Teilentladung verhindert wird. Mit Hilfe gezielter Dotierung bildet sich an den Korngrenzen des halbleitenden Metalloxids Doppel-Schottky-Barrieren aus, die einen sehr hohem Widerstand aufweisen und bei ausreichend hohen Spannungen zusammenbrechen. Durch die Dotierung des halbleitenden Metalloxids ergeben sich somit ein sehr hohes Energieabsorptionsvermögen, eine hohe Nichtlinearität und ein schnelles Schaltverhalten, sodass das Zünden einer Teilentladung effektiv verhindert wird. Darüber hinaus ist ein Widerstand bei niedrigen Spannungen über die Dotierung, beispielsweise bis auf 100 Qcm, einstellbar.

Bei einer weiteren Ausführungsform ist das halbleitende Metalloxid auf, insbesondere plättchenförmigen, Trägerpartikeln, insbesondere Glimmerpartikeln, gefällt. Durch das Binden an derartige Trägerpartikel werden eine niedrige Perkolationsschwelle, insbesondere aufgrund einer Plättchen-Geometrie bei einem ähnlichen Alpha erreicht. Ferner ist durch das Binden an Trägerpartikel ein gewünschter Formfaktor erreichbar.

Bei einer weiteren Ausgestaltung enthält das Reaktivharz Ruß und/oder Graphit, wobei ein Füllstoffgehalt von Ruß und/oder Graphit unterperkolär ausgestaltet ist. Insbesondere werden elektrisch leitfähige Mikropartikel aus Ruß und/oder Graphit als Füllmaterial herangezogen. Durch die Verwendung einer unterperkolären Füllung aus Ruß und/oder Graphit wird eine zumindest vorwiegend resistive Feldsteuerung ermöglicht.

In einer weiteren Ausführungsform enthält das Reaktivharz Metalloxid-Metallkapseln. Derartige Metalloxid-Metallkapseln sind elektrisch leitfähige Partikel, welche vollständig mit einem elektrisch isolierenden Werkstoff gekapselt sind. Beispielsweise werden Aluminiumpartikel, welche insbesondere als Mikropartikel ausgeführt sind, vollständig mit isolierendem Siliziumdioxid (SiO₂) gekapselt. Die Verwendung derartiger Mikropartikel führt zu einer zumindest vorwiegend kapazitiven Feldsteuerung, da die Mikropartikel jeweils das Verhalten eines µ-Kondensators aufweisen.

Bei einer weiteren Ausgestaltung ist ein Füllstoffgehalt der Metalloxid-Metallkapseln überperkolär ausgestaltet. Durch den überperkolären Füllstoffgehalt wird die Leitfähigkeit, insbesondere bei hohen Impulsspannungen, erhöht, sodass das Zünden einer Teilentladung verhindert wird.

In einer weiteren Ausführungsform sind eine Art und/oder ein Formfaktor des Füllstoffs hinsichtlich einer zu erwartenden Feldstärke in der elektrischen rotierenden Maschine optimiert. Beispielsweise durch eine Abmischung von mindestens zwei Arten von Füllstoffen (Siliziumcarbid, halbleitendem Metalloxid, Metalloxid-Metallkapseln, Ruß/Graphit) ist eine bestimmte, insbesondere maschinenspezifische, U-I Kennlinie erhältlich. Durch eine Variation des Formfaktors ist das elektrische Verhalten ebenfalls optimierbar.

Bei einer weiteren Ausgestaltung wird das elektrisch funktionell gefüllte Reaktivharz mittels Träufelimprägnierung aufgebracht. Beispielsweise wird das elektrisch funktionell gefüllte Reaktivharz mittels Träufelimprägnierung auf die Wickelköpfe der, insbesondere langsam, um die Rotationsachse rotierenden elektrischen rotierenden Maschine aufgetragen, wobei ein kontinuierlicher pulsationsfreier Dosierfluss erreicht wird. Insbesondere eine moderne Träufelimprägnieranlagen ermöglicht es, mit funktionellem Füllstoff gefüllte Harzsysteme sauber, einfach und, im Vergleich zu einem teuren Wickelkopfverguss, kostengünstig auf eine Wicklung, insbesondere auf einen Wickelkopf, aufzubringen.

Im Folgenden wird die Erfindung anhand der in den Figuren dargestellten Ausführungsbeispiele näher beschrieben und erläutert.

Es zeigen:
- FIG 1: eine schematische Querschnittsdarstellung einer elektrischen rotierenden Maschine,
- FIG 2: eine vergrößerte Längsschnittdarstellung zweier benachbarter Leiter einer Statorwicklung und
- FIG 3: eine schematische Darstellung eines Verfahrens zur Imprägnierung von Leitern einer elektrischen rotierenden Maschine.

Bei den im Folgenden erläuterten Ausführungsbeispielen handelt es sich um bevorzugte Ausführungsformen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

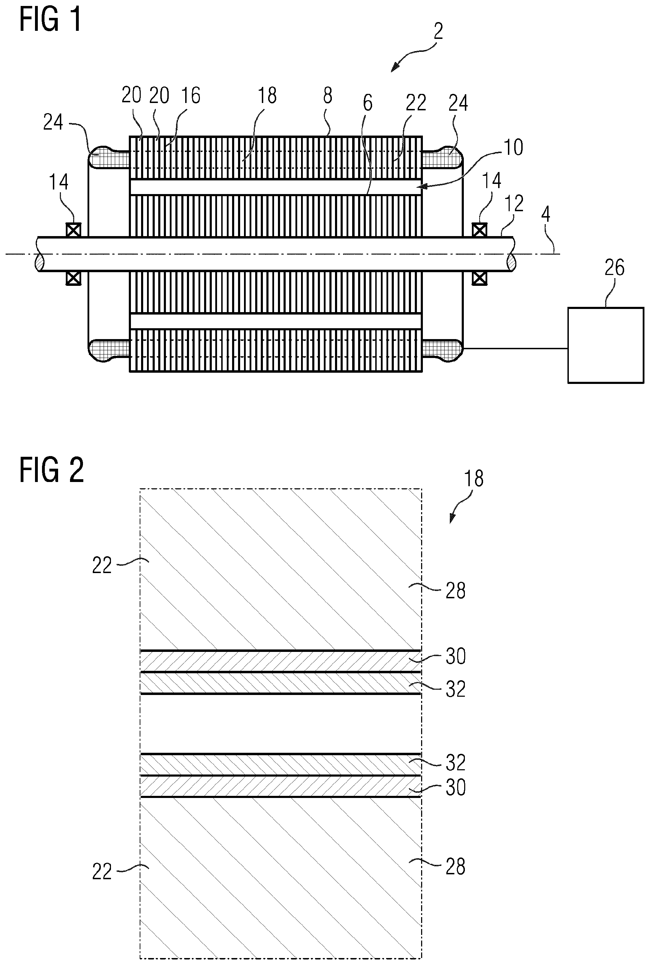

FIG 1 zeigt schematische Querschnittsdarstellung einer elektrischen rotierenden Maschine 2, die beispielhaft als Niederspannungsmaschine ausgeführt und mit einer Spannung von maximal 1 kV betreibbar ist. Die elektrische rotierende Maschine 2, welche als Motor und/oder als Generator betreibbar ist, weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet. Der Rotor 6 weist eine Welle 12 auf, die mittels Lagern 14 drehbeweglich angeordnet ist. Der Stator 8 umfasst ein Statorblechpaket 16 mit einer Statorwicklung 18, wobei das Statorblechpaket 16 aus einer Vielzahl von geschichteten Elektroblechen 20 aufgebaut ist. Die Statorwicklung 18 ist beispielsweise als Drahtwicklung ausgeführt und umfasst in Axialrichtung durch das Statorblechpaket 16 verlaufenden Spulen 22, die an den axialen Enden des Statorblechpakets 16 Wickelköpfe 24 ausbilden. Die elektrische rotierende Maschine 2 wird von einem Umrichter 26 gespeist.

FIG 2 zeigt eine vergrößerte Längsschnittdarstellung zweier benachbarter Leiter 28 einer Statorwicklung 18. Die Leiter 28 sind jeweils einer Spule 22 zugeordnet und sind mit einer elektrischen Isolierung 30, die beispielsweise als Drahtlack ausgeführt ist, beschichtet. Darüber hinaus sind die Leiter zur Erhöhung einer TE-Einsetzspannung, zumindest im Bereich der Wickelköpfe 24, mit einer elektrisch funktionell gefüllten Imprägnierung 32 überzogen. Das beispielsweise für die Imprägnierung 32 verwendete elektrisch funktionell gefüllte Reaktivharz (1K oder 2K) hat eine, insbesondere elektrisch, feldsteuernde Wirkung. Die feldsteuernde Wirkung wird beispielsweise durch eine Füllung erreicht, die einen feldstärkeabhängigen Leitwert aufweist.

Beispielsweise enthält die Imprägnierung 32 Siliziumcarbid (SiC), das einen feldabhängigen nichtlinearen Leitwert aufweist. Insbesondere liegt das Siliziumcarbid in Form von splittrigen globularen Mikropartikeln vor, wobei der Füllstoffgehalt von Siliziumcarbid überperkolär ist. Ein überperkolärer Füllstoffgehalt ist oberhalb einer Partikelmassenkonzentration, bei der sich das elektrisch leitfähige Netzwerk der Partikel vollständig ausgebildet hat. Dieses liegt beispielsweise bei, insbesondere kommerziellen, Siliziumcarbid-Füllstoffen, die als sphärische Mikropartikel mit einer Größe von Größe 5-30 µm vorliegen, im Bereich von 60-90 Gewichtsprozent (Dichte 3,2g/cm³). Durch die Nutzung von Siliziumcarbid als Füllstoff-Material kann sowohl die notwendige Leitfähigkeit im Bereich hoher Impulsspannungen, wie sie beispielsweise bei einer Teilentladung auftreten, sichergestellt werden, als auch eine hohe Isolationswirkung bei während des Betriebes der elektrischen rotierenden Maschine üblichen Spannungen erreicht werden.

Verschiedene Maschinen mit unterschiedlichen Nennspannungen und Schaltungen erfordern möglicherweise unterschiedliche Füllstoffe mit unterschiedlichem elektrischem Verhalten. Zusätzlich oder alternativ enthält die Imprägnierung 32 ein halbleitendes Metalloxid, insbesondere Zinkoxid (ZnO), Zinndioxid (SnO₂) oder Titansuboxid (beispielsweise TiO), als Füllstoff. Als Titansuboxid werden Titanoxide bezeichnet, die weniger Sauerstoff als das thermodynamisch stabilste Oxid im chemischen System Ti-O, Titandioxid (TiO₂), enthalten. Zinkoxid weist beispielsweise ein Varistor-Verhalten auf, wobei ein Nichtlinearitätskoeffizient α, verglichen mit Siliziumcarbid, deutlich höher ist. Insbesondere ist ein Füllstoffgehalt des halbleitenden Metalloxids überperkolär, wobei das halbleitende Metalloxid optional, insbesondere mit Antimon (Sb), Fluor (F) oder Iod (I), dotiert ist. Beispielsweise enthält die Imprägnierung 32 Zinndioxid (SnO₂) dotiert mit Antimon (Sb). Optional ist das halbleitende Metalloxid auf, insbesondere plättchenförmigen, Trägerpartikeln, beispielsweise Glimmerpartikeln, gefällt, um einen gewünschten Formfaktor zu erreichen.

Zusätzlich oder alternativ enthält die Imprägnierung 32 Metalloxid-Metallkapseln als Füllstoff. Derartige Metalloxid-Metallkapseln sind elektrisch leitfähige Partikel, welche vollständig mit einem elektrisch isolierenden Werkstoff gekapselt sind. Verwendet werden beispielsweise Aluminiumpartikel, welche insbesondere als Mikropartikel ausgeführt und vollständig mit isolierendem Siliziumdioxid (SiO₂) gekapselt sind. Insbesondere ist ein Füllstoffgehalt der Metalloxid-Metallkapseln überperkolär. Die Verwendung derartiger Mikropartikel führt zu einer kapazitiven Feldsteuerung, da die Mikropartikel jeweils das Verhalten eines µ-Kondensators aufweisen.

Zusätzlich oder alternativ enthält die Imprägnierung 32 Ruß und/oder Graphit als Füllstoff, wobei ein Füllstoffgehalt von Ruß und/oder Graphit unterperkolär ausgestaltet ist. Die Verwendung von Ruß- und/oder Graphit-Mikropartikel als Füllstoff führt, aufgrund der elektrischen Leitfähigkeit der Partikel, zu einer resistiven Feldsteuerung.

Insbesondere sind eine Art und ein Formfaktor des Füllstoffs hinsichtlich einer zu erwartenden Feldstärke in der elektrischen rotierenden Maschine 2 optimiert. Durch eine Abmischung von mindestens zwei Arten der beschriebenen Füllstoffe (Siliziumcarbid, halbleitendem Metalloxid, Metalloxid-Metallkapseln, Ruß/Graphit) ist eine bestimmte, insbesondere maschinenspezifische, U-I Kennlinie erhältlich. Die weitere Ausgestaltung der Statorwicklung 18 in FIG 2 entspricht der Ausführung in FIG 1.

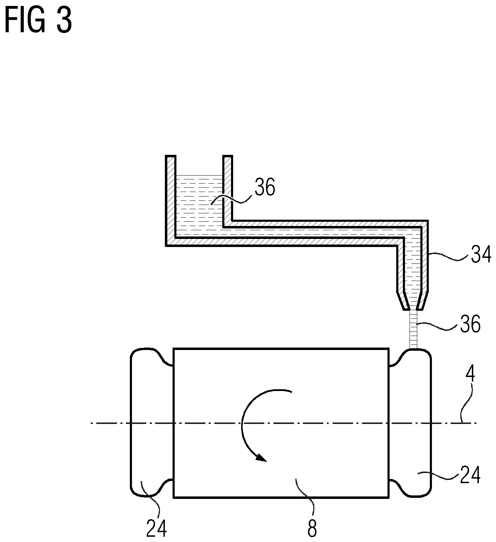

FIG 3 zeigt eine schematische Darstellung eines Verfahrens zur Imprägnierung von Leitern 28 einer elektrischen rotierenden Maschine 2. Eine Imprägnierung findet im in FIG 3 dargestellten Verfahren im Bereich der Wickelköpfe 24 nach dem Einsetzen der Statorwicklung 18 in das Statorblechpaket 16 statt, wobei das elektrisch funktionell gefüllte Reaktivharz mittels Träufelimprägnierung aufgebracht wird. Mittels einer Träufelvorrichtung 34 wird bei diesem Imprägnierverfahren das elektrisch funktionell gefüllte Reaktivharz 36 auf die Wickelköpfe 24 des, insbesondere langsam, um die Rotationsachse 4 rotierenden Stators 8 der elektrischen rotierenden Maschine 2 aufgetragen, wobei ein kontinuierlicher pulsationsfreier Dosierfluss erreicht wird. Die Rheologie kann dabei als niederviskose Paste, bzw. hochviskoser Lack (10³-10⁴ mPas) bezeichnet werden, der sich auf dem rotierenden Wickelkopf verteilt und die Hohlräume (Zwickel) zwischen den Leitern 28 und/oder Leiterbündeln füllt. Die rheologischen Eigenschaften sind durch Additive optimierbar. Je nach verwendetem Harz (1K oder 2K) härtet das auf die Wickelköpfe 24 aufgetragene elektrisch funktionell gefüllte Reaktivharz 36 bei Raumtemperatur aus oder wird in einem Ofen gebacken. Alternativ wird beispielsweise eine andere Dispenser-Anlage zum Auftragen der Imprägnierung verwendet. Die weitere Ausgestaltung des elektrisch funktionell gefüllte Reaktivharz 36 in FIG 3 entspricht der Ausführung in FIG 2.

Zusammenfassend betrifft die Erfindung eine elektrische rotierende Maschine 2, insbesondere eine umrichterbetriebene Niederspannungsmaschine mit einem Stator 8. Damit Teilentladungen während des Betriebes, im Vergleich zum Stand der Technik, weniger häufig auftreten, wird vorgeschlagen, dass der Stator 8 ein Statorblechpaket 16 und eine in Nuten des Statorblechpakets 16 angeordnete Statorwicklung 18 aufweist, wobei die Statorwicklung 18 elektrisch isolierte Spulen 22 umfasst, die an den axialen Enden des Statorblechpakets 16 Wickelköpfe 24 ausbilden, wobei die elektrisch isolierten Spulen 22 zur Erhöhung einer TE-Einsetzspannung, zumindest im Bereich der Wickelköpfe 24, mit einem elektrisch funktionell gefüllten Reaktivharz 36 imprägniert sind.

## Patentansprüche

1. Elektrische rotierende Maschine (2), insbesondere umrichterbetriebene Niederspannungsmaschine, aufweisend einen Stator (8),
wobei der Stator (8) ein Statorblechpaket (16) und eine in Nuten des Statorblechpakets (16) angeordnete Statorwicklung (18) aufweist,
wobei die Statorwicklung (18) elektrisch isolierte Spulen (22) umfasst, die an den axialen Enden des Statorblechpakets (16) Wickelköpfe (24) ausbilden,
wobei die elektrisch isolierten Spulen (22) zur Erhöhung einer TE-Einsetzspannung, zumindest im Bereich der Wickelköpfe (24), mit einem elektrisch funktionell gefüllten Reaktivharz (36) imprägniert sind.

2. Elektrische rotierende Maschine (2) nach Anspruch 1,
wobei das elektrisch funktionell gefüllte Reaktivharz (36) einen feldstärkeabhängigen Leitwert aufweist.

3. Elektrische rotierende Maschine (2) nach einem der Ansprüche 1 oder 2,
wobei das Reaktivharz (36) Siliziumcarbid enthält.

4. Elektrische rotierende Maschine (2) nach Anspruch 3,
wobei ein Füllstoffgehalt von Siliziumcarbid überperkolär ausgestaltet ist.

5. Elektrische rotierende Maschine (2) nach einem der Ansprüche 3 oder 4,
wobei der Siliziumcarbid-Füllstoff als Mikropartikel mit einer Partikelgröße von 5-30 µm ausgeführt ist.

6. Elektrische rotierende Maschine (2) nach einem der vorherigen Ansprüche,
wobei das Reaktivharz (36) ein halbleitendes Metalloxid, insbesondere Zinkoxid, Zinndioxid oder Titansuboxid enthält.

7. Elektrische rotierende Maschine (2) nach Anspruch 6,
wobei das halbleitende Metalloxid mit Antimon, Fluor oder Iod dotiert ist und/oder
wobei ein Füllstoffgehalt des halbleitenden Metalloxids überperkolär ausgestaltet ist.

8. Elektrische rotierende Maschine (2) nach einem der Ansprüche 6 oder 7,
wobei das halbleitende Metalloxid auf, insbesondere plättchenförmigen, Trägerpartikeln, insbesondere Glimmerpartikeln, gefällt ist.

9. Elektrische rotierende Maschine (2) nach einem der vorherigen Ansprüche,
wobei das Reaktivharz (36) Ruß und/oder Graphit enthält, wobei ein Füllstoffgehalt von Ruß und/oder Graphit unterperkolär ausgestaltet ist.

10. Elektrische rotierende Maschine (2) nach einem der vorherigen Ansprüche,
wobei das Reaktivharz (36) Metalloxid-Metallkapseln enthält.

11. Elektrische rotierende Maschine (2) nach Anspruch 10,
wobei ein Füllstoffgehalt der Metalloxid-Metallkapseln überperkolär ausgestaltet ist.

12. Elektrische rotierende Maschine (2) nach einem der vorherigen Ansprüche,
wobei eine Art und ein Formfaktor des Füllstoffs hinsichtlich einer zu erwartenden Feldstärke in der elektrischen rotierenden Maschine (2) optimiert sind.

13. Verfahren zur Herstellung einer elektrischen rotierenden Maschine (2), insbesondere einer umrichterbetriebenen Niederspannungsmaschine, aufweisend einen Stator (8),
wobei der Stator (8) ein Statorblechpaket (16) und eine in Nuten des Statorblechpakets (16) angeordnete Statorwicklung (18) aufweist,
wobei die Statorwicklung (18) elektrisch isolierte Spulen (22) umfasst, die an den axialen Enden des Statorblechpakets (16) Wickelköpfe (24) ausbilden,
wobei die elektrisch isolierten Spulen (22) zur Erhöhung einer TE-Einsetzspannung, zumindest im Bereich der Wickelköpfe (24), mit einem elektrisch funktionell gefüllten Reaktivharz (36) imprägniert werden.

14. Verfahren nach Anspruch 13,
wobei das elektrisch funktionell gefüllte Reaktivharz (36) mittels Träufelimprägnierung aufgebracht wird.

15. Verwendung eines elektrisch funktionell gefüllten Reaktivharzes (36) zur Imprägnierung einer Statorwicklung (18) einer elektrischen rotierenden Maschine (2), insbesondere einer umrichterbetriebenen Niederspannungsmaschine, zur Erhöhung einer TE-Einsetzspannung.
